# EUROPEAN PATENT SPECIFICATION

(11) **EP 4 043 306 B1**
(45) Date of publication and mention of the grant of the patent: **08.11.2023**
(21) Application number: 21156208.7
(22) Date of filing: 10.02.2021
(51) Int. Cl.: B60T 13/74, F16D 65/38

(54) **BRAKING DEVICE ACTUATOR, SLACK RECOVERY ACTUATOR, SYSTEM FOR ACTUATING A BRAKING DEVICE AND METHODS THEREFORE**
AKTUATOR EINER BREMSVORRICHTUNG, AKTUATOR ZUR RÜCKGEWINNUNG VON SPIEL, SYSTEM ZUR BETÄTIGUNG EINER BREMSVORRICHTUNG UND VERFAHREN DAZU
ACTIONNEUR DE DISPOSITIF DE FREINAGE, ACTIONNEUR DE RÉCUPÉRATION DE JEU, SYSTÈME D'ACTIONNEMENT D'UN DISPOSITIF DE FREINAGE ET PROCÉDÉS CORRESPONDANTS

(43) Date of publication of application: 17.08.2022
(73) Proprietor: KNORR-BREMSE Systeme für Nutzfahrzeuge GmbH, 80809 München (DE)
(72) Inventor: KOKREHEL, Csaba, 1119 Budapest (HU); NEMETH, Huba, 1116 Budapest (HU); MLINÁRCSEK, Csaba, 1165 Budapest (HU); SZABO, Janos, 1042 Budapest (HU); BLESSING, Michael, 80687 München (DE)

(56) References cited:
- EP-A1- 0 266 856
- EP-A2- 0 129 969
- WO-A1-02/49892
- CN-A- 109 869 424

## Description

The present invention relates to a system for one service brake and/or parking brake operation. The invention further relates to methods for bearing up and actuating a braking device by means of such a system.

Such actuators and methods are useful for one last operation of a service and/or parking brake when a regular actuator is inactive or unpowered. One example would be an electrically operated service and/or parking brake in which the regular electric actuator is inoperable due to lack of electric energy.

While it is possible to provide an emergency electric energy storage for operating the brakes, such devices, for example rechargeable batteries, are often cumbersome when provided with the energy storage capacity required for brake operation.

Furthermore, wear of brake pads of the braking device may make it necessary to bear up the brake pads to make contact and only then provide full actuation of the brake.

Electro-pneumatic brake actuators are also known. Generally, these actuators utilize pneumatic energy sources via pneumatic cylinders to provide both the service brake actuation and the parking brake release. Two actuators are provided so that the parking brake release is independent of the service brake actuation and can act independently. However, it is undesirable in electric vehicles to require an energy intensive compressor to provide pneumatic pressure.

In WO 02/49892, a single clock spring is used to actuate a parking brake when a voltage supply of a brake control and/or actuating device is disrupted.

EP 0 266 856 A1 discloses a combination of two springs, one clock spring and one helical spring, for actuating a brake device. The clock spring may be engaged to a actuator shaft of the brake device and used to actuate the brake. However, if there is excessive slack in the brake device, a motor is energized to rotate the clock spring such that the slack is recovered.

EP 0 129 969 A2 provides a means for improving accuracy of an electrically-controlled force-exerting actuator by using a control spring controlled by the electric motor and acting in opposition to a power spring.

According to CN 109869424 A, an electrically controlled mechanical brake comprises a motor for actuating the brake in a service brake mode via a shaft and a clock spring engageable with the shaft for actuating the brake in a parking mode.

It is thus an object of the invention to provide an improved braking device actuator, slack recovery actuator and system for actuating a braking device that may be used in electric vehicles as well as corresponding methods for actuating a braking device.

This object is solved by a system for one service brake and/or parking brake operation according to claim 1 and a method for actuating a braking device according to claim 8.

The object is solved by a system for one service brake and/or parking brake operation, comprising an actuator for a braking device for one service brake and/or parking brake operation is provided, comprising a shaft for actuating the braking device, and electric actuator for actuating the shaft and the first mechanical energy storage device for actuating the shaft independent of the electric actuator, wherein the first mechanical energy storage device is selectively engageable with and disengageable from the shaft and a slack recovery actuator for bearing up braking pads of the braking device to each other in preparation of one service brake and/or parking brake operation, comprising the shaft for adjusting a position of braking pads of the braking device, and a second mechanical energy storage device, wherein the actuator and the slack recovery actuator comprise a common shaft and wherein the first mechanical energy storage device and the second mechanical energy storage device are separate, wherein the second mechanical energy storage device is selectively engageable with and disengageable from the shaft.

In a compact and light fashion, the system provides both a way to bear up the braking pads and then actuating the braking device. Separating these two functions to be provided by two different mechanical energy storage devices allows each of the mechanical energy storage devices to build in a specialized and thus more compact and light way such that the system is more compact and light than with one mechanical energy storage device to provide both functions.

A slack recovery actuator allows for compensation of wear of brake pads during the brake operation. Slack may also appear when the brake has, for any reason, been rewound far enough for a gap between the braking pads to appear and/or to widen and may be compensated the same way. The second mechanical energy storage device allows for this compensation to also be used when a regular actuator provided to this end is inoperable. Since it neither requires cumbersome pneumatic equipment nor a sizable electric energy storage it can be built in a light and compact fashion, which is ideal for electric vehicles.

If the electric actuator is not operable, the first mechanical energy storage may be engaged with the shaft to actuate the braking device. In this way, it is not necessary to provide pneumatic pressure for any operation and, furthermore, a huge electric energy storage is also unnecessary. Thus, the actuator for the braking device may be built in a compact and light fashion which is advantageous for its use in electric vehicles. Since the second mechanical energy storage device is selectively engageable and disengageable from the shaft, it is possible to set e.g. a pretension of the second mechanical energy storage device.

In a further embodiment, the first mechanical energy storage devices engageable by means of a clutch arrangement which is operable to selectively set one of the following states: a first state, in which the first mechanical energy storage device is engaged with the shaft and a second state, in which the first mechanical energy storage device is locked.

The first mechanical energy storage device may thus be charged while the clutch arrangement is in its first state using the electric actuator provided for regular operation. Once the first mechanical energy storage device has been charged, the clutch arrangement may be brought into the second state which will lock the first mechanical energy storage device, thus preserving the mechanical energy stored therein until needed. No further actuator is required to charge the first mechanical energy storage device.

In a further embodiment, the actuator comprises a linear brake actuator for actuating the braking device and a converter for converting rotation of the shaft to a linear movement of the linear brake actuator, wherein the converter connects the shaft to the linear brake actuator.

If the braking device is built so that it is actuated by linear action and not by rotation, the converter will allow the actuator to be used with such a braking device.

In a further embodiment, the first mechanical energy storage device in the second mechanical energy storage device are configured to store energy as elastic potential energy and the first mechanical energy storage device and the second mechanical energy storage device are configured to be charged and discharged by rotation of the shaft.

Since the electric actuator can provide a rotation of the shaft during regular operation, the first mechanical energy storage device in the second mechanical energy storage device can be charged during regular operation without requiring further equipment. Since no additional equipment for charging the mechanical energy storage devices is required, a compact and light system for brake operation is achieved which may advantageously be utilized in electric vehicles.

In a further embodiment, the first mechanical energy storage device is configured to provide a higher average torque than the second mechanical energy storage device while being discharged.

In this way, the required torque for bearing up the brake pads and for actuating the brake can be provided by mechanical energy storage devices that are tailored to each task and thus more compact and lighter than one mechanical energy storage device that would provide both.

In a further embodiment, the first mechanical energy storage devices configured to provide fewer rotations of the shaft and the second mechanical energy storage device when discharged.

In general, more rotations are required for bearing up the brake pads and are required for the actual brake actuation. Using mechanical energy storage devices that are specialized for each task makes for a more compact and lighter build than using one mechanical energy storage device that would provide both.

When these features are combined, providing a first mechanical energy storage device which is configured to provide a higher average torque and a lower number of rotations of the shaft and the second mechanical energy storage device which is configured to provide a lower average torque and a higher number of rotations of the shaft, this leads to an even more compact and light build of the system.

In a further embodiment, the first mechanical energy storage device and/or the second mechanical energy storage device comprises a torsion spring.

Torsion springs may be formed in a compact manner and may easily be configured to particular needs regarding torque and/or number of rotations, often called stroke.

The object is further solved by a method for bearing up and actuating a braking device by means of any of the systems described above comprising the steps: waiting for the actuation of the shaft to slow down and/or stop after energy stored in the second mechanical energy storage has actuated the shaft, then engaging the first mechanical energy storage device with the shaft to release the mechanical energy stored therein to the shaft.

With this method, the energy for actuating the braking device stored in the first mechanical energy storage device is applied in an optimized fashion since the energy from the second mechanical energy storage device has already brought the brake pads of the braking device into an optimized position for beginning the actuation of the actual brake. Each of the mechanical energy storage devices can be tailored to its task. This results in a compact and light build which is advantageous for use in electric vehicles.

Further advantages and other aspects of the invention will be described in further detail below with reference to the accompanying schematic drawings, wherein
- Fig. 1: is a schematic illustration of a cut through an actuator for a braking device according to an embodiment of the invention;
- Fig. 2: is a schematic illustration of a converter for converting rotation to a linear movement according to an embodiment of the invention;
- Fig. 3: is a schematic illustration of a cut through a slack recovery actuator according to an embodiment of the invention;
- Fig. 4: is a schematic illustration of a cut through a system according to an embodiment of the invention;
- Fig. 5: is a schematic illustration of a cut through a first mechanical energy storage device according to an embodiment of the invention;
- Fig. 6: is a schematic illustration of a cut through a second mechanical energy storage device according to an embodiment of the invention and
- Fig. 7: is a schematic illustration of a cut through a system for one service brake and/or parking brake operation according to an embodiment of the invention.

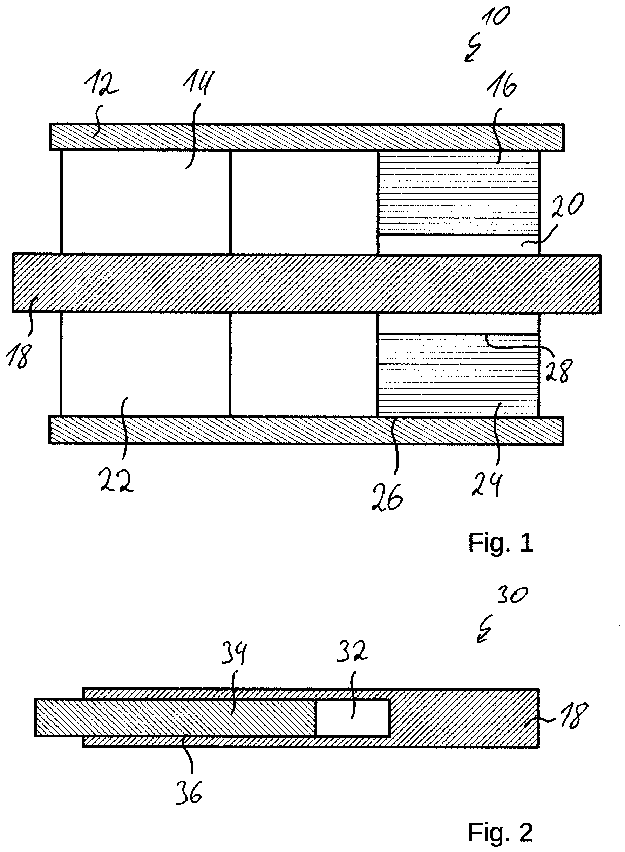

**Fig. 1** generally shows a brake actuator 10 according to an embodiment of the invention, in particular for a vehicle brake, comprising a housing 12, a first actuator 14 and a second actuator 16, wherein the actuators 14, 16 are arranged on a shaft 18. The actuators 14, 16 are configured to be able to exert a torque on the shaft 18, in particular relative to the housing 12.

The first actuator 14 comprises an electric motor 22 for rotating the shaft 18.

Rotation of the shaft 18 actuates a service brake and/or parking brake which is not shown. Rotation of the shaft 18 in a first direction tightens brake pads of the brake and rotation in a second direction opposite to the first direction releases the brake pads.

The second actuator 16 comprises a first mechanical energy storage device 24 which is connected to the shaft 18 by means of a clutch arrangement 20. The second actuator 16 is furthermore connected to the housing 12. The first mechanical energy storage device is embodied as a torsion spring 24 which comprises two ends, an outside end 26 fixed to the housing 12 and an inside end 28 fixed to the clutch arrangement 20.

The inside end 28 of the torsion spring 24 is selectively engageable with and disengageable from the shaft 18 by means of the clutch arrangement 20. The clutch arrangement 20 is operable to select a first state or a second state wherein in the first state, the torsion spring 24 is engaged with the shaft 18 by its inside end 28 and wherein in the second state, the torsion spring 24 is disengaged from the shaft 18 and is rotationally locked to the housing 12.

When the inside end 28 of the torsion spring 24 is engaged with the shaft 18 in the first state of the clutch arrangement 20, the shaft 18 and torsion spring 24 can exchange torque. Thus, the torsion spring 24 may turn the shaft 18 in this state if there is no other torque applied to the shaft 18.

Furthermore, the electric motor 22 may turn the shaft 18 and charge the torsion spring 24.

The electric motor 22 provides the service brake and/or parking brake actuation during normal operation. If normal operation is no longer possible and the electric motor 22 can no longer be operated, e.g. when an electrical system providing power to the electric motor 22 fails, the first mechanical energy storage device provides energy for one last operation of the service brake and/or parking brake. To achieve this, in a first step, the clutch arrangement 20 is operated to select the first state. Then, the torsion spring 24 will turn the shaft 18 to actuate the service brake and/or parking brake.

When the brake pads of the braking device are pressed on each other due to the actuation, a resisting force and/or torque acts on the shaft 18 and will increase with the pressure between the brake pads. In this way, the rotation of the shaft 18 will automatically stop when the torque provided by the torsion spring 24 equals the resisting torque exerted by the braking device.

Braking devices may require a linear movement of an actuator to be actuated. In this case, a converter for converting rotation of the shaft 18 to a linear movement may be required.

**Fig. 2** shows an example of an appropriate converter 30 according to an embodiment of the invention. The shaft 18 comprises an opening 32 into which a linear brake actuator 34 is inserted. A contact surface 36 between the shaft 18 and the linear brake actuator 34 is provided with a ball-screw spindle so that when the shaft 18 is rotated, a thread of the ball-screw spindle will provide a linear translation of the linear brake actuator 34.

Such a converter 30 may be provided as a separate device to be connected to the shaft 18 of an actuator 10 or may be integrated in the shaft 18 of an actuator 10.

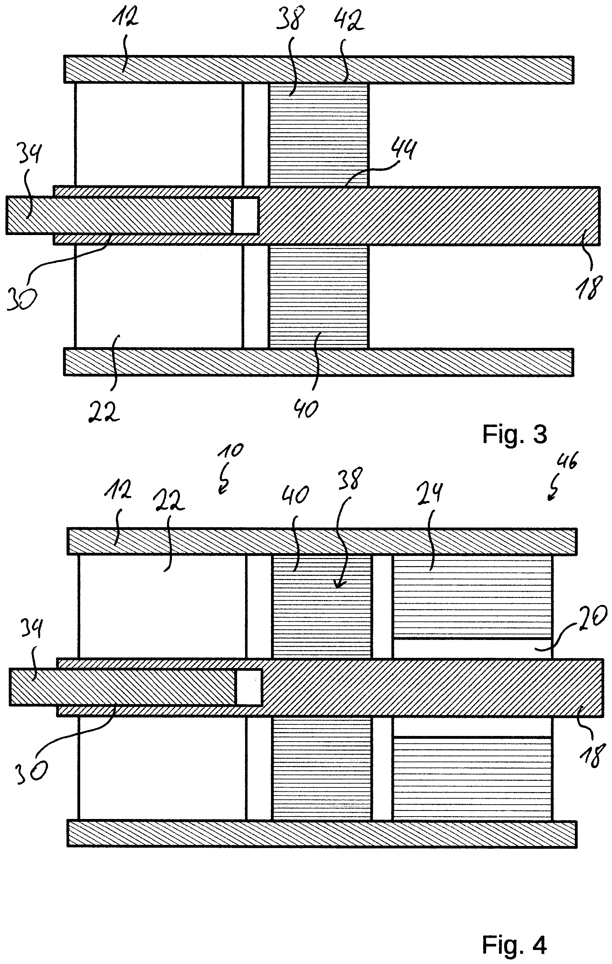

**Fig. 3** shows a slack recovery actuator 38. Features shown herein that have the same function as for previous embodiments of the invention are represented with the same reference number. Thus the slack recovery actuator 38 comprises a shaft 18. The slack recovery actuator 38 is arranged on the shaft 18 for example within the housing 12. The electric motor 22 is also arranged on the shaft 18. Within the shaft 18 there is, for example, an embedded converter 30 providing a linear brake actuator 34.

The slack recovery actuator 38 comprises a second mechanical energy storage device embodied as a torsion spring 40. The torsion spring 40 comprises an outside end 42 as well as an inside end 44. The inside end 44 is fixed on the shaft 18. The outside end 42 is fixed on the housing 12.

In normal operation, the electric motor 22 will rotate the shaft 18 to provide service brake and/or parking brake operation. During this operation, the electric motor 22 will charge or discharge the torsion spring 40. If, for any reason, the electric motor 22 no longer provides any torque, e.g. when no electric power is provided to the motor 22, the torsion spring 40 will rotate the shaft 18 to actuate brake pads of the braking device.

This rotation of the shaft 18 will continue until the brake pads come in contact with each other. At this time, the rotation of the shaft 18 will meet with a resistance torque transmitted from the braking device via the linear brake actuator 34. As soon as this happens, the rotation will slow down and finally stop. When this happens, the brake pads of the braking device will be in contact with each other and the braking device will be ready for operation.

This action of bringing brake pads in contact with each other is called bearing up the brake pads. It is necessary to bear up brake pads because a position of the linear brake actuator 34 at which the brake pads are in contact with each other varies with aging and worn out brake pads. Thus, the point at which the brake pads are in contact with each other cannot be measured once and then used over the lifetime of the brake but has to be frequently identified anew. Furthermore, the electric motor 22 may pull the brake pads apart so that a gap appears between them when the brake is loosened. The slack recovery actuator 38 makes sure that the brake pads are in contact by turning the shaft 18 until the brake pads bear up. Parameters of the torsion spring 40, in particular the torque exerted by the torsion spring 40, may be chosen depending on parameters of the braking device. In particular, the torque exerted by the torsion spring 40 may be chosen such that movement of the shaft 18 will not continue beyond the bear up point such that a braking effect is not achieved.

**Fig. 4** shows a system 46 for one braking device operation, in particular for one operation of a service brake and/or a parking brake. The system 46 comprises features described above which are represented with the same reference number here if their function is the same as previously described.

The system 46 comprises a brake actuator 10 and a slack recovery actuator 38 arranged on a common shaft 18. In particular, the system 46 comprises the electric motor 22, the first mechanical energy storage device 24, the clutch arrangement 20 and the second mechanical energy storage device 40. As before, the first mechanical energy storage device 24 and the second mechanical energy storage device 40 each comprise a torsion spring.

Torsion springs 24, 40 have certain characteristics, two of which are relevant to an advantageous function of the system 46. Firstly, the torsion springs 24, 40 have a characteristic stroke which is a number of rotations of the torsion springs 24, 40 over which a torque exerted by the torsion springs 24, 40 stays roughly the same. Outside of this stroke, the torque exerted either rises or falls sharply.

Secondly, torsion springs 24, 40 have a characteristic torque that they exert while they are within their stroke range.

In the system 46, the torsion spring 24 is provided with a shorter stroke and a higher average or characteristic torque than the torsion spring 40. This means, e.g., that the torsion spring 24 of the first mechanical energy storage device will provide fewer rotations of the shaft 18 than the torsion spring 40 of the second mechanical energy storage.

In this way, the system 46 provided with two torsion springs 24, 40, each of which is specialized for one task when braking.

To charge the system 46, the clutch arrangement 20 is operated to set the first state. The electrical motor 22 will then rotate the shaft 18 a certain number of rotations depending on the characteristics of the torsion spring 24. When this rotation has completed, the clutch arrangement 20 is operated to set the second state. In this way, the torsion spring 24 is locked to the housing and will hold the energy provided to it for later use.

When the system 46 is charged, it may be used for one last braking operation when normal operation of the electric motor 22 is not possible, e.g. when there is no electrical power in the vehicle. When there is no electrical power in the vehicle, the electric motor 22 will stop any action on the shaft 18, e.g. exertion of torque. A method for bearing up a brake pad and actuating a braking device will thus comprise the following steps:
In a first step, all action inhibiting movement of the shaft 18 is removed. This may include releasing, e.g. clutches, brakes or any other device blocking movement and/or rotation of the shaft 18. If no such devices exist or are not engaged, this step may be skipped.

When movement and/or rotation of the shaft 18 are not inhibited, the torsion spring 40 will rotate the shaft 18 to bear up the brake pads of the braking device to each other. Thus, a second step comprises waiting for the actuation, in this case the rotation, of the shaft 18 to slow down and/or to stop after the energy stored in the torsion spring 40 has actuated the shaft 18. As described above, once the brake pads bear up, rotation of the shaft 18 will meet with resistance which will rapidly become higher than the torque provided by the torsion spring 40. This will make the rotation of the shaft 18 slow down and/or stop.

Once the second step has been completed, in a third step, the torsion spring 24 is brought into engagement with the shaft 18 by operating the clutch arrangement 20 to set the first state. The torsion spring 24 has a higher torque than the torsion spring 40 and will thus be able to further rotate the shaft 18 to actuate the braking device.

One advantage of using two different torsion springs 24, 40 is that it is easier to build a torsion spring 24, 40 that has either short stroke and large torque or large stroke and small torque than it is to build one single torsion spring that has both a large stroke and large torque. In particular, the torsion spring 24 and the torsion spring 40 are both comparatively small to a hypothetical single torsion spring that has both large stroke and large torque. In this way, the system 46 is lighter with the two torsion springs 24, 40 than it would be with a single torsion spring.

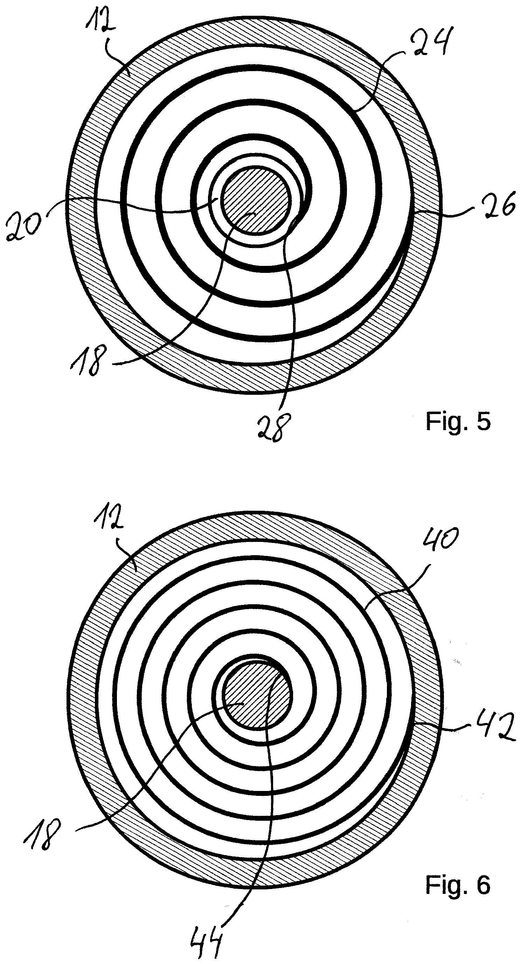

**Fig. 5** shows a schematic cut through the torsion spring 24 of the system 46 according to an embodiment of the invention. This torsion spring 24 may also be used in the brake actuator 10 described above. The outside end 26 is fixed on the housing 12 and the inside end 28 is fixed on the clutch arrangement 20 which may connect the inside end 28 to the shaft 18.

The torsion spring 24 is built similar to a mainspring of a clock in that it is a planar torsion spring 24. When turned clockwise in this example, the torsion spring 24 is charged with elastic mechanical energy.

**Fig. 6** shows a schematic cut through the torsion spring 40 of the system 46 according to an embodiment of the invention. This torsion spring 40 may also be used in the slack recovery actuator 38 described above. The outside end 42 is affixed to the housing 12 and the inside end 44 is fixed to the shaft 18.

The torsion spring 40 is built similar to a mainspring of a clock in that it is a planar torsion spring 40. When turned clockwise in this example, the torsion spring 40 is charged with elastic mechanical energy.

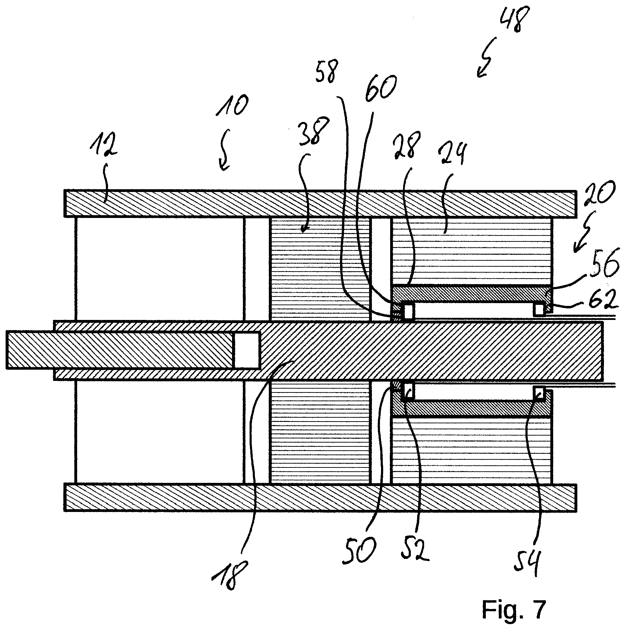

**Fig. 7** shows a schematic cut through a system 48 similar to the system 46 shown in Fig. 4. Similar features will again be identified by the same references. The system 48 comprises a housing 12, a slack recovery actuator 38 and a brake actuator 10 arranged on the same shaft 18. The clutch arrangement 20 comprises, for example, a bushing 56 to which the inside end 28 of the torsion spring 24 is affixed.

The clutch arrangement 20 further comprises, for example, a clutch ring 50 as well as a first clutch device 52 and a second clutch device 54. The clutch ring 50 is affixed to the shaft 18 or may be integral to the shaft 18. The first clutch device 52 is arranged to be pressed against a first clutch surface 58 of the clutch ring 50 and a second clutch surface 60 of the bushing 56. The second clutch device 54 is arranged to be pressed against a third clutch surface 62 of the bushing 56.

To bring the clutch arrangement 20 into the first state, the first clutch device 52 is pressed against the first clutch surface 58 and the second clutch surface 60, thus connecting the two surfaces and forcing to turn the bushing 56 as well as the inside end 28 with the shaft 18. The first clutch device 52 is free to rotate together with the clutch surfaces 58, 60

To bring the clutch arrangement 20 into the second state, the first clutch device 52 is released from the clutch surfaces 58, 60. Then, the second clutch device 54 is pressed against the third clutch surface 62. The second clutch device 54 is rotationally locked to the housing 12, so that it inhibits rotation of the bushing 56 in this state.

The clutch arrangement 20 has a third state, in which the first clutch device 52 is pressed against the first clutch surface 58 and the second clutch surface 60 and, at the same time, the second clutch device 54 is pressed against the third clutch surface 62. In this third state, accordingly, the shaft 18 is rotationally locked to the housing 12. This state may be useful for example when a parking brake has been actuated and is to be locked in position.

In further embodiments, the clutch arrangement 20 may comprise clutch devices 52, 54 which are bi-stable or monostable.

In further embodiments, the system 46, 48 may, for example, comprise a control device for operating the system 46, 48 and for executing and/or commanding the first step, the second step and/or the third step. The control device may comprise sensors. Sensors may be provided, for example to detect movement and/or rotation of the shaft 18 and/or the linear brake actuator 34.

In further embodiments, the system 46, 48 may, for example, comprise an electrical energy storage device independent of an electric circuit of a vehicle. This electrical energy storage device may, for example, be used to power the control device.

The shaft 18 is used for adjusting a position of braking pads of the braking device in the sense that action on the shaft 18 will cause a variation of the position of the braking pads. To this end, it does not matter whether, in any particular embodiment, the shaft 18 is rotated or translated. It only matters that whichever action is used to actuate the braking device will change the position of the braking device's braking pads. Such action may thus engage and/or disengage the brake.

The torsion springs 24, 40 are mechanical energy storage devices in that they are configured to store energy as elastic potential energy. That means, that the energy necessary to deform the torsion springs 24, 40 is stored within, e.g. as tension. Torsion springs 24, 40 can, in particular, be charged and discharged by rotating one of their ends relative to the other. For the torsion spring 24, 40 shown herein to be similar to main springs of a clock, this means that, since they may be fixed to the shaft 18, they can be charged and discharged by rotation of the shaft 18.

The torsion spring 40 may be configured to always be pretensioned and may, for example, be provided with a stroke that at least covers the general range of actuation for normal brake operations of the shaft 18.

In alternative embodiments, the second mechanical energy storage device 40 may be connected to the shaft 18 by means of a further clutch arrangement.

In alternative embodiments, the housing 12 may have any usable shape, in particular a shape other than a cylindrical shape.

In alternative embodiments, the torsion springs 24, 40 may be not directly fixed to the housing 12 and/or the shaft 18 and/or the clutch arrangement 20 but to intermediate devices that are then fixed to the housing 12 and/or the shaft 18 and/or the clutch arrangement 20. Such intermediate devices may for example comprise bushings, sleeves and/or rings.

In alternative embodiments, the converter 30 may be provided separately from the brake actuator 10, the slack recovery actuator 38 and/or the system 46, 48. In particular, the converter 30 may be part of the braking device.

An actuator may be understood to be any device that can perform an action on the shaft. In particular, such action may for example comprise exerting a torque or a force on the shaft.

In further embodiments, the first mechanical energy storage device and/or the second mechanical energy storage device may be configured to directly exert linear action on the shaft 18.

### LIST OF REFERENCES

- 10: (brake) actuator
- 12: housing
- 14: actuator
- 16: actuator
- 18: shaft
- 20: clutch arrangement
- 22: electric motor (electric actuator)
- 24: torsion spring (first mechanical energy storage device)
- 26: outside end
- 28: inside end
- 30: converter
- 32: opening
- 34: linear brake actuator
- 36: contact surface
- 38: slack recovery actuator
- 40: torsion spring (second mechanical energy storage device)
- 42: outside end
- 44: inside end
- 46: system for operating a braking device
- 48: system for operating a braking device
- 50: clattering
- 52: first clutch device
- 54: second clutch device
- 56: bushing
- 58: first clutch surface
- 60: second clutch surface
- 62: third clutch surface

## Claims

1. System (46, 48) for one service brake and/or parking brake operation, comprising an actuator (10) for a braking device for one service brake and/or parking brake operation, comprising a shaft (18) for actuating the braking device, an electric actuator (14, 22) for actuating the shaft (18) and a first mechanical energy storage device (24) for actuating the shaft (18) independent of the electric actuator (14, 22), wherein the first mechanical energy storage device (24) is selectively engageable with and disengageable from the shaft (18) and a slack recovery actuator (38) for bearing up braking pads of the braking device to each other in preparation of one service brake and/or parking brake operation, comprising the shaft (18) for adjusting a position of braking pads of the braking device, and a second mechanical energy storage device (40), wherein the actuator (10) and the slack recovery actuator (38) comprise a common shaft (18) and wherein the first mechanical energy storage device (24) and the second mechanical energy storage device (40) are separate, **characterized in that** the second mechanical energy storage (40) device is selectively engageable with and disengageable from the shaft (18).

2. System according to claim 1,
wherein the first mechanical energy storage device (24) is engageable by means of a clutch arrangement (20) which is operable to selectively set one of the following states:
- A first state, in which the first mechanical energy storage device (24) is engaged with the shaft (18) and
- A second state, in which the first mechanical energy storage device (24) is locked.

3. System according to any of the claims 1 or 2,
wherein the actuator (10) comprises a linear brake actuator (34) for actuating the braking device and a converter (30) for converting a rotation of the shaft (18) to a linear movement of the linear brake actuator (34), wherein the converter (30) connects the shaft (18) to the linear brake actuator (34).

4. System according to any of the previous claims,
wherein
- the first mechanical energy storage device (24) and the second mechanical energy storage device (40) are configured to store energy as elastic potential energy and
- in that the first mechanical energy storage device (24) and the second mechanical energy storage device (40) are configured to be charged and discharged by rotation of the shaft (18).

5. System according to claim 4,
wherein
- the first mechanical energy storage device (24) is configured to provide a higher average torque than the second mechanical energy storage device (40) while being discharged.

6. System according to claim 4 or 5,
wherein
- the first mechanical energy storage device (24) is configured to provide fewer rotations of the shaft than the second mechanical energy storage device (40) when discharged.

7. System according to any of the claims 4 to 6,
wherein
- the first mechanical energy storage device (24) and/or the second mechanical energy storage device (40) comprises a torsion spring (24, 40).

8. Method for bearing up and actuating a braking device by means of any of the systems (46, 48) according to any of the previous claims,
**characterized by the steps**
- waiting for the actuation of the shaft (18) to slow down and/or stop after energy stored in the second mechanical energy storage device (40) has actuated the shaft (18), then
- engaging the first mechanical energy storage device (24) with the shaft (18) to release the mechanical energy stored therein to the shaft (18).

## Patentansprüche

1. System (46, 48) für einen Betriebsbremsen- und/oder Feststellbremsenbetrieb, umfassend einen Aktuator (10) für eine Bremsvorrichtung für einen Betriebsbremsenund/oder Feststellbremsenbetrieb, umfassend eine Welle (18) zum Betätigen der Bremsvorrichtung, einen elektrischen Aktuator (14, 22) zum Betätigen der Welle (18) und eine erste Speichervorrichtung (24) für mechanische Energie zum Betätigen der Welle (18) unabhängig von dem elektrischen Aktuator (14, 22), wobei die erste Speichervorrichtung (24) für mechanische Energie gezielt mit der Welle (18) in Eingriff bringbar und von dieser lösbar ist, und einen Spielwiederherstellungsaktuator (38) zum Abstützen von Bremsbelägen der Bremsvorrichtung hin zueinander in Vorbereitung eines Betriebsbremsen- und/oder Feststellbremsenbetriebs, umfassend die Welle (18) zum Verstellen einer Position von Bremsbelägen der Bremsvorrichtung, und eine zweite Speichervorrichtung (40) für mechanische Energie, wobei der Aktuator (10) und der Spielwiederherstellungsaktuator (38) eine gemeinsame Welle (18) umfassen und wobei die erste Speichervorrichtung (24) für mechanische Energie und die zweite Speichervorrichtung (40) für mechanische Energie separat sind, **dadurch gekennzeichnet, dass** die zweite Speichervorrichtung (40) für mechanische Energie gezielt mit der Welle (18) in Eingriff bringbar und von dieser lösbar ist.

2. System nach Anspruch 1,
wobei
die erste Speichervorrichtung (24) für mechanische Energie mittels einer Kupplungsanordnung (20) in Eingriff bringbar ist, die dazu betreibbar ist, gezielt einen der folgenden Zustände einzustellen:
- Einen ersten Zustand, in dem die erste Speichervorrichtung (24) für mechanische Energie mit der Welle (18) in Eingriff ist, und
- Einen zweiten Zustand, in dem die erste Speichervorrichtung (24) für mechanische Energie verriegelt ist.

3. System nach einem der Ansprüche 1 oder 2,
wobei
der Aktuator (10) einen linearen Bremsaktuator (34) zum Betätigen der Bremsvorrichtung und einen Wandler (30) zum Umwandeln einer Drehung der Welle (18) in eine lineare Bewegung des linearen Bremsaktuators (34) umfasst, wobei der Wandler (30) die Welle (18) mit dem linearen Bremsaktuator (34) verbindet.

4. System nach einem der vorhergehenden Ansprüche, wobei
- die erste Speichervorrichtung (24) für mechanische Energie und die zweite Speichervorrichtung (40) für mechanische Energie dazu ausgelegt sind, Energie als elastische potenzielle Energie zu speichern und
- dadurch, dass die erste Speichervorrichtung (24) für mechanische Energie und die zweite Speichervorrichtung (40) für mechanische Energie dazu ausgelegt sind, durch eine Drehung der Welle (18) aufgeladen und entladen zu werden.

5. System nach Anspruch 4,
wobei
- die erste Speichervorrichtung (24) für mechanische Energie dazu ausgelegt ist, ein höheres durchschnittliches Drehmoment als die zweite Speichervorrichtung (40) für mechanische Energie beim Entladen bereitzustellen.

6. System nach Anspruch 4 oder 5,
wobei
- die erste Speichervorrichtung (24) für mechanische Energie dazu ausgelegt ist, weniger Drehungen der Welle als die zweite Speichervorrichtung (40) für mechanische Energie beim Entladen bereitzustellen.

7. System nach einem der Ansprüche 4 bis 6,
wobei
- die erste Speichervorrichtung (24) für mechanische Energie und/oder die zweite Speichervorrichtung (40) für mechanische Energie eine Torsionsfeder (24, 40) umfasst.

8. Verfahren zum Abstützen und Betätigen einer Bremsvorrichtung mittels eines der Systeme (46, 48) nach einem der vorhergehenden Ansprüche,
**gekennzeichnet durch die Schritte**
- Warten, dass sich die Betätigung der Welle (18) verlangsamt und/oder anhält, nachdem in der zweiten Speichervorrichtung (40) für mechanische Energie gespeicherte Energie die Welle (18) betätigt hat, dann
- Ineingriffbringen der ersten Speichervorrichtung (24) für mechanische Energie mit der Welle (18), um die darin gespeicherte Energie an die Welle (18) abzugeben.

## Revendications

1. Système (46, 48) pour un fonctionnement de frein de service et/ou de frein de stationnement, comprenant un actionneur (10) d'un dispositif de freinage pour un fonctionnement de frein de service et/ou de frein de stationnement, comprenant un arbre (18) pour actionner le dispositif de freinage, un actionneur (14, 22) électrique pour actionner l'arbre (18) et un premier dispositif (24) d'accumulation d'énergie mécanique pour actionner l'arbre (18) indépendamment de l'actionneur (14, 22) électrique, dans lequel le premier dispositif (24) d'accumulation d'énergie mécanique peut être enclenché avec et désenclenché de l'arbre (18) et un actionneur (38) de récupération de jeu pour supporter des plaquettes de freinage du dispositif de freinage l'une l'autre en préparation d'un fonctionnement de frein de service et/ou de frein de stationnement, comprenant l'arbre (18) pour régler une position des plaquettes de freinage du dispositif de freinage, et un deuxième dispositif (40) d'accumulation d'énergie mécanique, dans lequel l'actionneur (10) et l'actionneur (38) de récupération de jeu comprennent un arbre (18) commun et dans lequel le premier dispositif (24) d'accumulation d'énergie mécanique et le deuxième dispositif (40) d'accumulation d'énergie mécanique sont distincts, **caractérisé en ce que** le deuxième dispositif (40) d'accumulation d'énergie mécanique peut être enclenché sélectivement avec et désenclenché de l'arbre (18).

2. Système suivant la revendication 1,
dans lequel
le premier dispositif (24) d'accumulation d'énergie mécanique peut être enclenché au moyen d'un agencement (20) d'embrayage, qui peut fonctionner pour mettre sélectivement l'un des états suivants :
- un premier état, dans lequel le premier dispositif (24) d'accumulation d'énergie mécanique est enclenché avec l'arbre (18) et
- un deuxième état, dans lequel le premier dispositif (24) d'accumulation d'énergie mécanique est verrouillé.

3. Système suivant l'une quelconque des revendications 1 ou 2,
dans lequel
l'actionneur (10) comprend un actionneur (34) linéaire de frein pour actionner le dispositif de freinage et un convertisseur (30) pour transformer une rotation en l'arbre (18) en un mouvement linéaire de l'actionneur (34) linéaire de frein, dans lequel le convertisseur (30) relie l'arbre (18) à l'actionneur (34) linéaire de frein.

4. Système suivant l'une quelconque des revendications précédentes,
dans lequel
- le premier dispositif (24) d'accumulation d'énergie mécanique et le deuxième dispositif (40) d'accumulation d'énergie mécanique sont configurés pour accumuler de l'énergie élastique potentielle, et
- en ce que le premier dispositif (24) d'accumulation d'énergie mécanique et le deuxième dispositif (40) d'accumulation d'énergie sont configurés pour être chargés et déchargés par rotation de l'arbre (18).

5. Système suivant la revendication 4,
dans lequel
- le premier dispositif (24) d'accumulation d'énergie mécanique est configuré pour donner un couple moyen plus grand que le deuxième dispositif (40) d'accumulation d'énergie mécanique, alors qu'ils sont déchargés.

6. Système suivant la revendication 4 ou 5,
dans lequel
- le premier dispositif (24) d'accumulation d'énergie mécanique est configuré pour donner moins de rotations de l'arbre que le deuxième dispositif (40) d'accumulation d'énergie mécanique, alors qu'ils sont déchargés.

7. Système suivant l'une quelconque des revendications 4 à 6,
dans lequel
- le premier dispositif (24) d'accumulation d'énergie mécanique et/ou le deuxième dispositif (40) d'accumulation d'énergie mécanique comprend un ressort (24, 40) de torsion.

8. Procédé pour supporter et actionner un dispositif de freinage au moyen de l'un quelconque du système (46, 48) suivant l'une quelconque des revendications précédentes, **caractérisé par** les stades :
- on attend que l'actionnement de l'arbre (18) ralentisse et/ou s'arrête, après que de l'énergie accumulée dans le deuxième dispositif (40) d'accumulation d'énergie mécanique a actionné l'arbre (18), puis
- on enclenche le premier dispositif (24) d'accumulation d'énergie mécanique avec l'arbre (18) pour donner de l'énergie mécanique, qui y est accumulée, à l'arbre (18).
